# EUROPEAN PATENT APPLICATION

(11) **EP 1 919 239 A1**
(43) Date of publication of application: **07.05.2008**
(21) Application number: 06796629.1
(22) Date of filing: 22.08.2006
(51) Int. Cl.: H04Q 7/38

(54) **MOBILE STATION, RADIO ACCESS NETWORK DEVICE, MOBILE EXCHANGE STATION, MOBILE COMMUNICATION SYSTEM, AND COMMUNICATION SERVICE ACCESS METHOD**

(30) Priority: 24.08.2005 JP 2005243428
(71) Applicant: NTT DoCoMo, Inc., Chiyoda-ku Tokyo 100-6150 (JP)
(72) Inventor: ISHII, Minami, Tokyo 1006150 (JP); KATO, Yasuhiro, Tokyo 1006150 (JP); ABETA, Sadayuki, Tokyo 1006150 (JP); NAKAMURA, Takehiro, Tokyo 1006150 (JP); SUZUKI, Takashi, Tokyo 1070052 (JP)
(74) Representative: HOFFMANN EITLE
(86) International application number: PCT/JP2006/316415
(87) International publication number: WO 2007/023812

(57) **Abstract**

In order to decrease delay time until data sending and receiving for a mobile station that is registered and that is in an idle state, the system is configured such that, when the mobile station issues a request of a communication service, the mobile station specifies a requesting QoS identifier, and launches a validity verification procedure for the service request, and a procedure of a security mode setup is completed along with a response to the service request, and channel information assigned to the mobile station is reported.

## Description

### TECHNICAL FIELD

The present invention relates to a mobile station, a radio access network apparatus, a mobility switching station, a mobile communication system, and a communication service access method.

### BACKGROUND ART

In a mobile communication system such as an IMT (International Mobile Telecommunications) 2000 system, when a mobile station, in an idle state, for which a registration process has been performed accesses the mobile communication system, the mobile station establishes an RRC connection (RRC connection establishment) to a radio network control apparatus, and after that, the mobile station transmits a service request to a mobility switching station.

When the mobility switching station receives the service request, the mobility switching station performs security setup for the mobile station. For the security setup, the mobility switching station executes a security mode command procedure for the mobile station via the radio network control apparatus to negotiate security parameters to be used and perform mutual checking.

After that, the mobile station transmits a voice conversation (SETUP) or packet communication request (active PDP context request) to the mobility switching station. In this procedure, the radio network control apparatus keeps radio resources using a RB setup (Radio Bearer setup) message (refer to a non-patent document 1, for example).
[non-patent document 1] 3GPP TR25.815 V0.2.1, Figure 6.1.3-1

### DISCLOSURE OF THE INVENTION

### PROBLEM TO BE SOLVED BY THE INVENTION

However, the following problem may occur in the above-mentioned background technique.

That is, according to the conventional method, there are a number of messages exchanged between the mobile station in the idle state for which registration process has been performed and the mobile communication system. Thus, it is difficult to decrease delay from the time when the mobile station requests the communication service to the time when communication actually starts.

Therefore, an object of the present invention is to provide a mobile station, a radio access network apparatus, a mobility switching station and a communication service access method that can decrease the delay from the time when the mobile station that has been registered and that is in the idle state requests the communication service to the time when communication starts.

### MEANS FOR SOLVING THE PROBLEM

To solve the above-mentioned problem, a mobile station of the present invention is mobile station in a mobile communication system including a mobile station, a radio access network apparatus and a mobility switching station, and as one of characteristics, the mobile station includes:
mobile station mobility management means configured to issue, along with a service request, a request for validity verification of the service request when starting communication.

By configuring in this way, a validity verification procedure of the service request can be launched from the mobile station side.

The radio access network apparatus of the present invention is a radio access network apparatus in a mobile communication system including a mobile station, a radio access network apparatus and a mobility switching station, and, as one of characteristics, the radio access network apparatus includes:
response message generation means configured to generate a response message for a random access request of the mobile station by including, in the response message, an identifier provided from the mobile communication system as channel setup information used by the mobile station and a random number used for the mobile station to calculate message authentication code; and
transmission means configured to transmit the response message to the mobile station that transmits the random access request.

By configuring in this way, it becomes possible, in response to the random access request from the mobile station, to generate a response message that reports an identifier provided to the mobile station by the mobile communication system and a random number used for the mobile station to calculate the message authentication code.

The mobility switching station of the present invention is a mobility switching station in a mobile communication system including a mobile station, a radio access network apparatus, and the mobility switching station, and, as one of characteristics, the mobility switching station includes:
mobility switching station mobility management means configured to perform, along with a registration process of the mobile station, a security mode setup process as necessary according to a service request sent from the mobile station; and
mobile station information management means configured to store, in connection with the registration process, at least one of a ciphering key, a ciphering algorithm, an integrity protection key, and an integrity protection algorithm of the mobile station in an idle mode.

By configuring in this way, it becomes possible to perform the registration process of the mobile station, and perform the security setup process as necessary in response to the service request from the mobile station.

The mobile communication system of the present invention is a mobile communication system including a mobile station, a radio access network apparatus and a mobility switching station, and, as one of characteristics,
the mobile station includes:
mobile station mobility management means configured to issue, along with a service request, a request for validity verification of the service request when starting communication,
the radio access network apparatus includes:
response message generation means configured to generate a response message for the random access request of the mobile station by including, in the response message, an identifier provided from the mobile communication system as channel setup information used by the mobile station and a random number used for the mobile station to calculate message authentication code; and
transmission means configured to transmit the response message to the mobile station that transmits the random access request, and
the mobility switching station includes:
mobility switching station mobility management means configured to perform, along with a registration process of the mobile station, a security mode setup process as necessary according to the service request sent from the mobile station; and
mobile station information management means configured to store, in connection with the registration process, at least one of a ciphering key, a ciphering algorithm, an integrity protection key, and an integrity protection algorithm of the mobile station in an idle mode.

By configuring in this way, a validity verification procedure of the service request can be launched from the mobile station side, the radio access network apparatus can generate, in response to the random access request from the mobile station, a response message that reports an identifier provided to the mobile station by the mobile communication system and a random number used for the mobile station to calculate the message authentication code, and the mobility switching station can perform the registration process of the mobile station, and perform the security setup process as necessary in response to the service request from the mobile station.

The communication service access method of the present invention is a communication service access method in a mobile communication system including a mobile station, a radio access network apparatus and a mobility switching station, and as one of characteristics,
the mobile station performs:
an access request step of issuing a random access request to the radio access network; and
a service request step of issuing, along with a service request, a request for validity verification of the service request when starting communication,
the radio access network apparatus performs:
a response message generation step of generating a response message for the random access request of the mobile station by including, in the response message, an identifier provided from the mobile communication system as channel setup information used by the mobile station and a random number used for the mobile station to calculate message authentication code; and
a transmitting step of transmitting the response message to the mobile station that transmits the random access request, and
the mobility switching station performs:
a registration step of performing, along with a registration process of the mobile station, a security mode setup process as necessary according to the service request sent from the mobile station; and
a storing step of storing, in connection with the registration process, at least one of a ciphering key, a ciphering algorithm, an integrity protection key, and an integrity protection algorithm of the mobile station in an idle mode.

By configuring in this way, a validity verification procedure of the service request can be launched from the mobile station side, the radio access network apparatus can generate, in response to the random access request from the mobile station, a response message that reports an identifier provided to the mobile station by the mobile communication system and a random number used for the mobile station to calculate the message authentication code, and the mobility switching station can perform the registration process of the mobile station, and perform the security setup process as necessary in response to the service request from the mobile station.

### EFFECT OF THE INVENTION

According to an embodiment of the present invention, a mobile station, a radio access network apparatus, a mobility switching station, a mobile communication system and a communication service access method can be realized in which the delay until data sending and receiving can be decreased for a mobile station that is registered and that is in an idle state.

### BRIEF DESCRIPTION OF THE DRAWINGS

Fig.1 is a block diagram showing a mobile communication system according to an embodiment of the present invention;
Fig.2 is a block diagram showing a mobile station according to an embodiment of the present invention;
Fig.3 is a functional block diagram showing a mobility switching station according to an embodiment of the present invention;
Fig.4 is a block diagram showing a radio access network apparatus according to an embodiment of the present invention;
Fig.5 is a block diagram showing a radio access network apparatus according to an embodiment of the present invention;
Fig.6 is a sequence diagram showing a communication service access method according to an embodiment of the present invention.

### Description of reference signs

- 100: mobile station
- 200: radio access network apparatus
- 300: mobility switching station

### PREFERRED EMBODIMENTS FOR CARRYING OUT THE INVENTION

Next, embodiments of the present invention are described with reference to figures. By the way, in all figures for describing embodiments, same symbols are used for parts having same function, and repeating descriptions are not provided.

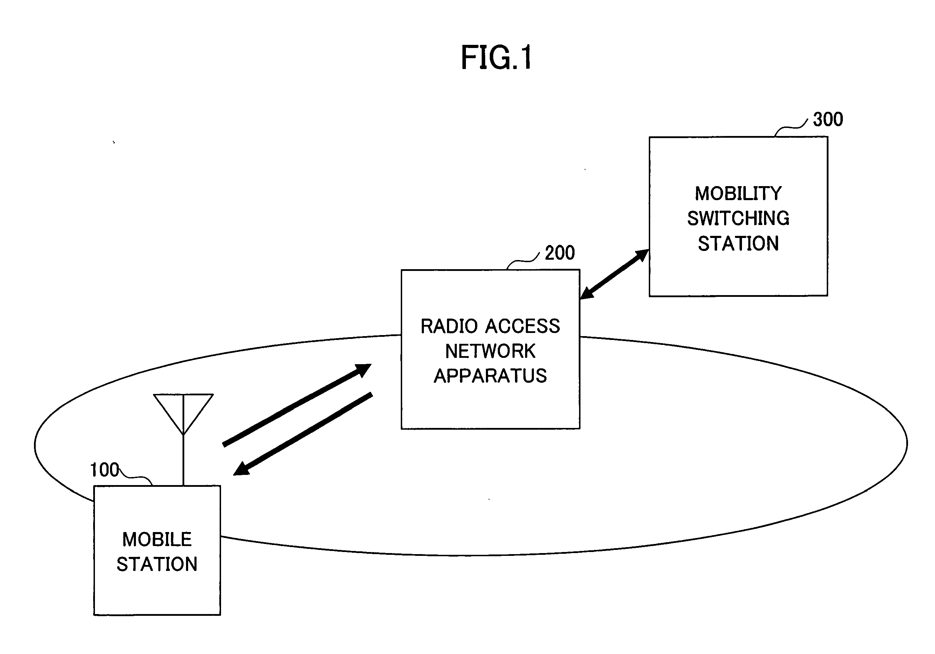

A mobile communication system according to the present embodiment is described with reference to Fig.1.

The mobile communication system of the present embodiment includes a mobile station 100, a radio access network apparatus 200 and a mobility switching station 300.

The mobile station 100 and the radio access network apparatus 200 can perform radio communication with each other using at least a shared data channel. In addition, the radio access network apparatus 200 and the mobility switching station 300 are connected by radio or cable.

The present embodiment is an example in which the radio access network apparatus 200 includes a function of a radio base station to perform radio communication directly with the mobile station 100. Other than that, the radio access network apparatus 200 may not be provided with the function of the radio base station, and one or more radio base station controlled by the radio access network apparatus 200 may be prepared so that communication with the mobile station 100 may be performed via the radio base station.

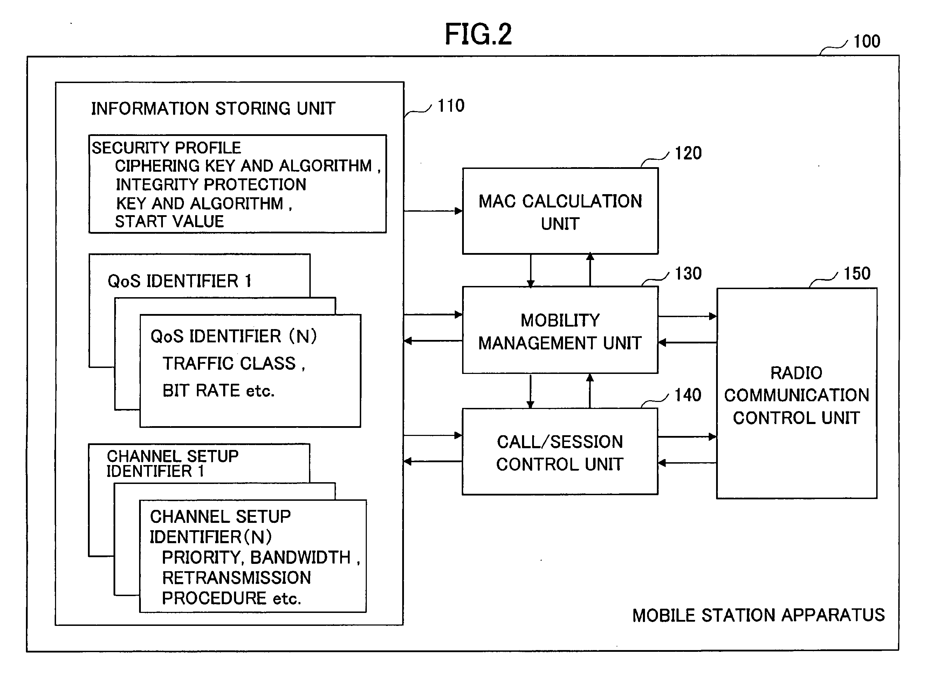

Next, the mobile station 100 according to the present embodiment is described with reference to Fig.2.

The mobile station 100 includes a message authentication code calculation unit 120 (to be referred to as MAC calculation unit hereinafter), a mobility management unit 130 connected to the MAC calculation unit 120, a call/session control unit 140 and a radio communication control unit 150 that are connected to the mobility management unit 130, and an information storing unit 110 that is connected to the MAC calculation unit 120, the mobility management unit 130 and the call/session control unit 140. The radio communication control unit 150 is connected to the call/session control unit 140.

The MAC calculation unit 120 calculates message authentication code based on an integrity protection algorithm agreed when performing a security mode setup process based on security mode setup procedure performed between the mobile station 100 and the mobility switching station 300. For example, the MAC calculation unit 120 calculates the message authentication code using the integrity protection algorithm agreed when performing authentication and key agreement process based on authentication and key agreement procedure performed between the mobile station and the mobility switching station 300 when the power of the mobile station 100 is turned on.

The mobility management unit 130 performs service request based on a service request procedure of the mobile station 100, registration process based on registration procedure, position registration process based on position registration procedure, authentication/key agreement process based on authentication/key agreement procedure, security setup process based on security setup procedure, registration release process based on registration release procedure, and the like.

In the present embodiment, a validity verification request for the service request is made along with the service request by the mobile station 100. The mobility management unit 130 of the mobile station 100 issues the validity verification request of the service request along with the service request. In addition, in this case, when transmitting the service request, the mobility management unit 130 may specify a requesting QoS using an identifier determined by the mobile communication system.

The call/session control unit 140 performs call setup/release procedures, session setup/release procedures and the like.

The radio communication control unit 150 exchanges control information with the radio network access apparatus 200 to control radio communication.

The information recording unit 110 stores and manages a security profile, QoS identifier information and channel setup identifier information.

The security profile includes a ciphering key, a ciphering algorithm, an integrity protection key, an integrity protection algorithm, and a START value used as an input parameter for the ciphering algorithm and the integrity protection algorithm, that are generated when performing the authentication/key agreement procedure.

The QoS identifier information is information regarding an identifier, provided beforehand by the mobile communication system, corresponding to a combination of pieces of information (bit rate, traffic class and the like) defining QoS.

The channel setup identifier information is information regarding an identifier, provided beforehand by the mobile communication system, corresponding to a combination of pieces of information (priority, retransmission procedure, channel mapping, bandwidth and the like) defining a channel configuration.

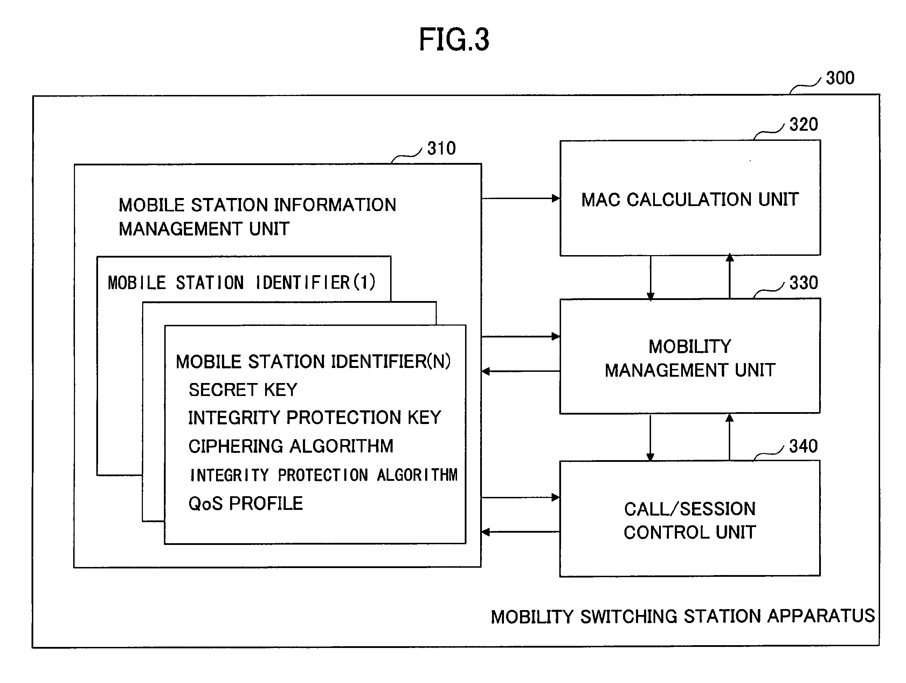

Next, the mobility switching station 300 is described with reference to Fig.3.

The mobility switching station 300 includes a message authentication code calculation unit 320 (to be referred to as MAC calculation unit, hereinafter), a mobility management unit 330 connected to the MAC calculation unit 320, a call/session control unit 340 connected to the mobility management unit 330, and a mobile station information management unit 310 connected to the MAC calculation unit 320, the mobility management unit 330 and the call/session management unit 340.

The MAC calculation unit 320 examines integrity of a received communication service request.

The mobility management unit 330 performs a service request process, a registration process, a position registration process, an authentication/key agreement process, a security mode setup process, a registration release process and the like for the mobile station 100.

The call/session management unit 340 performs a call setup/release process, a session setup/release process and the like.

Related to the registration process of the mobile station, the mobile station information management unit 310 stores and manages, for each mobile station, a mobile station identifier, and, at least one of a ciphering key, an integrity protection key, a ciphering algorithm, an integrity protection algorithm, a QoS profile of the mobile station in an idle mode.

When the mobile station 100 is turned on, the mobile station 100 performs, by the mobility management unit 130, the registration process and the authentication/key agreement process between the mobile station 100 and the mobility switching station 300 via the radio access network apparatus.

The mobility management unit 330 of the mobility switching station 300 stores, in the mobile station information management unit 310, information on the mobile station 100 (mobile station identifier, ciphering key, integrity protection key, ciphering algorithm, integrity protection algorithm, QoS profile) that are reported or generated when the registration process and the authentication/key agreement process are performed.

The mobility switching station 300 holds the information on the mobile station 100 in the mobile station information management unit 310 even after the mobile station 100 changes to an idle state. When the registration release procedure is performed for the mobile station 100, the mobility management unit of the mobility switching station 300 deletes the information on the mobile station 100 from the mobile station information management unit 310.

In addition, when the mobile station moves between mobility switching stations to perform a position registration process between the mobile station 100 and an other mobility switching station that is different from the mobility switching station 300 to which position registration has been performed, the mobility management unit 330 of the mobility switching station 300 of the movement origination transfers the information of the mobile station 100 from the mobile station information management unit 310 to the other mobility switching station, that is, transfers at least one of the ciphering key, the ciphering algorithm, the integrity protection key, and the integrity protection algorithm of the mobile station in the idle mode, and deletes the transferred information from stored information (the registration release procedure). A mobility management unit 320 of the other mobility switching station of the moving destination holds the received information of the mobile station 100 in its mobile station information management unit 310.

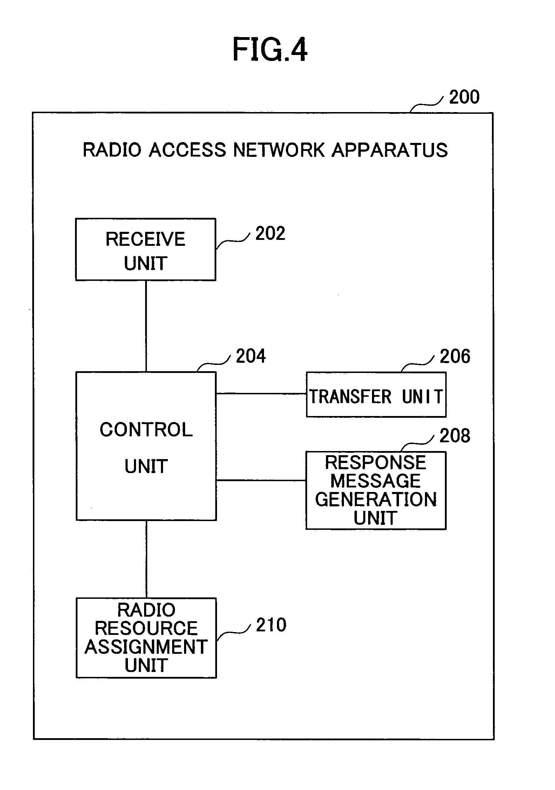

Next, the radio access network apparatus 200 of the present embodiment is described with reference to Fig.4.

The radio access network apparatus 200 includes a receive unit 202, a control unit 204 as retransmission message determination means connected to the receive unit 202, and a transfer unit 206, a response message generation unit 208 and a radio resource assignment unit 210 that are connected to the control unit 204.

The receive unit 202 receives a random access request and a service request transmitted from the mobile station 100. The transfer unit 206 transfers a communication service request transmitted from the mobile station 100 to the mobility switching station 300. The response message generation unit 208 generates a response to the random access request transmitted from the mobile station 100. The radio resource assignment unit 210 assigns radio resources according to the communication service response transmitted from the mobility switching station 300 to generate a communication service response.

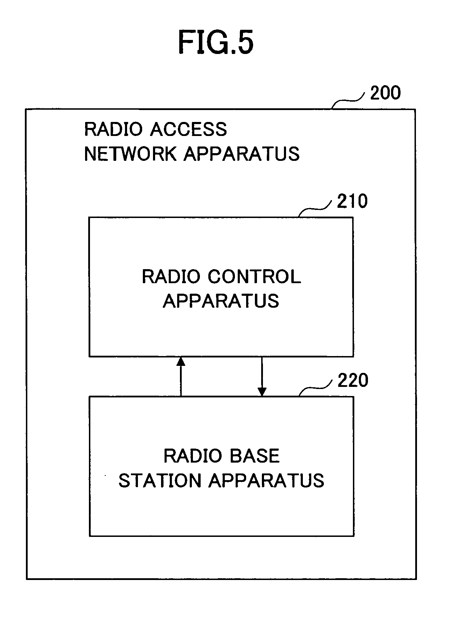

As shown in Fig.5, for example, the radio access network apparatus 200 of the present embodiment is realized by a radio control apparatus 210 and a radio base station apparatus 220.

The present embodiment is an example in which the radio access network apparatus 200 includes a function of the radio control apparatus 210 and a function of the radio base station 220. However, the radio control apparatus 210 and the radio base station 220 may be provided separately. However, from the viewpoint for decreasing delay time associated with data transmission, it is desirable to provide the function of the radio control apparatus 210 and the function of the radio base station 220 within a same apparatus.

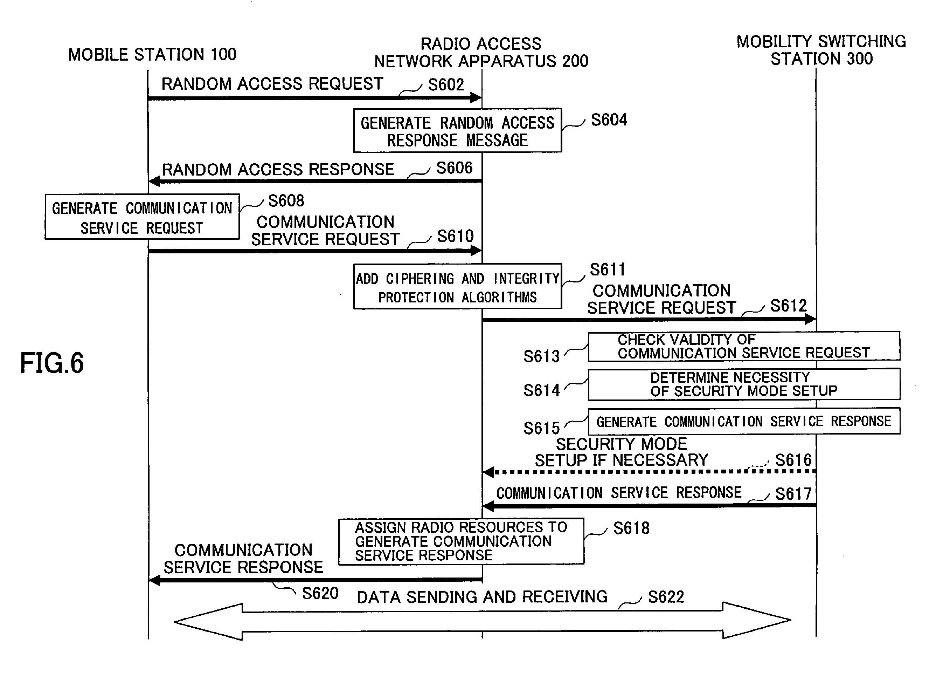

Next, a communication service access sequence of a mobile station that is registered and that is in an idle mode in a mobile communication system according to an embodiment of the present invention is described with reference to Fig.6.

In order that the mobile station 100 requests access to a shared data channel, the call/session control unit 140 transmits a random access request (step S602). Although communication is started based on a trigger from the mobile station 100 in the present embodiment, the following sequence can be also applied similarly to a case in which communication is started based on a trigger from the mobility switching station 300.

The random access request transmitted from the mobile station 100 is received by the receive unit 202 of the radio access network apparatus 200. The radio access network apparatus 200 that receives the random access request generates a random access response message by the response message generation unit 208 (step S604), and sends the random access response massage to the mobile station 100 (step S606). The random access response message includes a predetermined identifier on shared data channel setup information (provided from the mobile communication system) and a random number (to be referred to as FRESH value hereinafter) used for calculation of message authentication code by the mobile station 100, for example.

Next, when the mobile station 100 receives the random access response message, the mobile station 100 generates a communication service request by the mobility management unit 130 (step S608) to access the shared data channel according to the identifier on the shared data channel setup information included in the random access response message, and transmit the communication service request (step S610). The communication service request includes a mobile station identifier, a predetermined identifier (to be referred to as requesting QoS identifier hereinafter) indicating QoS necessary for the requested communication service, a ciphering parameter (uplink ciphering start timing, START value), the FRESH value, and message authentication code of the service request calculated using the FRESH value.

For example, the calculation of the message authentication code is performed using an integrity protection algorithm that is agreed when the authentication and key agreement procedure is performed between the mobile station 100 and the mobility switching station 300 at the time of power-on of the mobile station 100, and that is stored in the information storing unit 110.

The mobile station identifier and the predetermined identifier (to be referred to as requesting QoS identifier hereinafter) indicating QoS necessary for the requested communication service correspond to information for service request. In addition, the ciphering parameter (uplink ciphering start timing, START value), FRESH value, and message authentication code of the service request calculated using the FRESH value correspond to information for validity verification request for the service request.

As mentioned above, in the present embodiment, information for the service request and information for the request for validity verification of the service request are included in a message as the communication service request and it is transmitted (step S610). As a result, the number of exchanged messages can be effectively decreased between the radio access network apparatus 200 and the mobility switching station 300 in the mobile communication system side from the time when the mobile station in an idle state for which registration process has been performed requests a communication service to the time when communication starts, so that delay time can be effectively decreased.

When the radio access network apparatus 200 receives the communication service request, the transfer unit 206 includes, into the message of the communication service request, ciphering and integrity protection algorithm information implemented by the radio access network apparatus 200 and a sequence number of the received massage (step S611) to transfer the message to the mobility switching station 300 (step S612).

As mentioned above, since the radio access network apparatus 200 adds, to the communication service request received from the mobile station 100, the ciphering algorithm and integrity protection algorithm information implemented by the radio access network apparatus 200 (step S611) and transfers the message to the mobility switching station 300, it becomes possible to add a request of security mode setup to the communication service request sent from the mobile station 100.

That is, as mentioned later, the mobility switching station 300 compares thus obtained ciphering and integrity protection algorithms implemented in the radio access network apparatus 200 with ciphering and integrity protection algorithms to be applied to the mobile station 100 so as to determine necessity for a security mode setup process for the radio access network apparatus 200 (step S614).

As the sequence number of the received message to be included in the message of the communication service request transferred to the mobility switching station 300, a sequence number used for service request by the mobile station 100 is used.

The control unit 204 of the radio access network apparatus 200 may determine whether the message of the communication service request transmitted from the mobile station is a retransmission message based on the random number, included in the message, used for calculation of the message authentication code.

When the mobility switching station 300 receives the communication service request transferred from the radio access network apparatus 200, the mobility switching station 300 calculates message authentication code by the MAC calculation unit 320 based on the random number (that is the FRESH value), used for calculation of the message authentication code, included in the radio service request transferred from the radio access network apparatus 200.

The mobility management unit 330 examines integrity of the received communication service request to verify integrity of the communication service request based on the message authentication code calculated in the above-mentioned way (step S613).

That is, it is determined whether the message authentication code calculated using the FRESH value included in the message of the communication service request transferred from the mobile station 100 via the radio access network apparatus 200 is the same as the message authentication code included in the message of the communication service request. As a result, when they are determined to be the same, it is determined that there is no problem in integrity and validity of the communication service request.

When there is a problem in the integrity of the communication service request, the mobility management unit 330 transmits a response indicating service rejection (service rejection response) to the radio access network apparatus 200.

The radio access network apparatus 200 receives it in the receive unit 202, and transfers the service rejection response to the mobile station 100 by the transfer unit 206.

When the mobile station 100 receives the service rejection response by the radio communication control unit 150, the radio communication control unit 150 reports the message to the call/session control unit 140.

On the other hand, when there is no problem in the integrity of the communication service request, the mobility management unit 330 compares the requesting QoS identifier with QoS profile of the mobile station 100 stored in the mobile station management unit 310 so as to determine radio resource information to be requested for the radio access network apparatus 200.

In addition, the mobility management unit 330 compares the ciphering and integrity protection algorithms to be applied to the mobile station stored in the mobile station management unit 310 with the ciphering and integrity protection algorithms of the radio access network apparatus 200 so as to check whether the ciphering and integrity protection algorithms to be applied to the mobile station 100 are already supported by the radio access network apparatus 200 (step S614).

That is, the mobility management unit 330 determines necessity of the security mode setup process based on a result of comparison to compare the ciphering and integrity protection algorithms, implemented in the radio access network apparatus 200, included in the communication service request transferred in step S612 from the radio access network apparatus 200 with the algorithms to be used for the mobile station 100 (step S614).

When the result of the comparison indicates agreement so that it is determined that the ciphering and integrity protection algorithms applied to the mobile station 100 are already supported by the radio access network apparatus 200, the mobility management unit 330 generates a communication service response without performing the security mode setup process (sep S615) and transmits the communication service response via the call/session control unit 340 (step S617).

On the other hand, when the result of the comparison does not indicate agreement so that it is determined that the ciphering and integrity protection algorithms to be applied to the mobile station 100 are not supported by the radio access network apparatus 200, the communication service response is transmitted (step S617) after security mode setup process is performed (step S616).

The security mode setup process is a process for causing the radio access network apparatus 200 to implement the ciphering and integrity protection algorithms to be applied to the mobile station 100 so that the ciphering and integrity protection algorithms are supported by the radio access network apparatus 200 to enable communication with the mobile station 100 via the radio access network apparatus 200.

The communication service response sent from the mobility switching station 300 to the radio access network apparatus 200 includes a mobile station identifier, radio resource information requested to the radio access network apparatus 200, and the ciphering key, the ciphering algorithm, the integrity protection key, the integrity protection algorithm and a downlink ciphering start timing, of the mobile station 100, stored in the mobile station management unit 310.

Next, when the receive unit 202 of the radio access network apparatus 200 receives the communication service response, the radio resource assignment unit 210 executes assignment of radio resources according to radio resource information included in the communication service response to generate a communication service response (step S618) to transmit the communication service response to the mobile station 100 (step S620).

The communication service response includes the mobile station identifier, the downlink ciphering start timing, and information for using assigned radio resources. When the channel setup information corresponds to a predetermined channel setup identifier, the information for using assigned radio resources is the corresponding channel identifier. When the channel setup information does not correspond to the predetermined channel setup identifier, the information for using assigned radio resources is a channel setup parameter.

The mobile station 100 performs data sending and receiving according to the channel information (step S622).

Accordingly, when the mobile station 100 issues a request for a communication service, the mobile station 100 specifies an identifier of the requesting QoS and launches the procedure for validity verification for the service request from the mobile station side, and the radio access network apparatus 200 launches the security mode setup procedure, completes the security mode setup procedure along with the response of the service request, and reports channel information assigned to the mobile station by the response to the service request. Thus, the number of exchanged messages can be decreased between the mobile station 100 and the mobile communication system (radio access network apparatus 200 and the mobility switching station 300).

According to the present embodiment, the delay until the mobile station in an idle state for which registration process has been performed starts requested communication can be decreased.

### [Industrial Applicability]

The mobile station, the radio access network apparatus, the mobility switching station, the mobile communication system, and the communication service access method can be applied to a radio communication system.

The present application claims priority based on Japanese patent application No.2005-243428, filed in the JPO on August 24, 2005 and the entire contents of the Japanese patent application No.2005-243428 are incorporated herein by reference.

## Claims

1. A mobile station in a mobile communication system including a mobile station, a radio access network apparatus and a mobility switching station, comprising:
mobile station mobility management means configured to issue, along with a service request, a request for validity verification of the service request when starting communication.

2. The mobile station as claimed in claim 1, the mobile station further comprising:
message authentication code calculation means configured to calculate message authentication code,
wherein the mobile station mobility management means provides, to the service request, a random number that is used for calculating the message authentication code and that is reported from the radio access network apparatus, and the message authentication code calculated using the random number.

3. The mobile station as claimed in claim 1, wherein, when transmitting the service request, the mobile station mobility management means specifies a requesting QoS using an identifier determined by the mobile communication system.

4. A radio access network apparatus in a mobile communication system including a mobile station, a radio access network apparatus and a mobility switching station, comprising:
response message generation means configured to generate a response message for a random access request of the mobile station by including, in the response message, an identifier provided from the mobile communication system as channel setup information used by the mobile station and a random number used for the mobile station to calculate message authentication code; and
transmission means configured to transmit the response message to the mobile station that transmits the random access request.

5. The radio access network apparatus as claimed in claim 4, comprising:
retransmission message determination means configured to, when receiving a message from the mobile station, determine whether the message is a retransmission message based on the random number, used for calculating the message authentication code, included in the message.

6. The radio access network apparatus as claimed in claim 4, comprising:
transfer means configured to transfer a service request transmitted from the mobile station to the mobility switching station by including a sequence number used for the service request by the mobile station.

7. The radio access network apparatus as claimed in claim 6, wherein the transfer means transfers the service request to the mobility switching station by including, in the service request, ciphering and integrity protection algorithm information implemented in the radio access network apparatus.

8. A mobility switching station in a mobile communication system including a mobile station, a radio access network apparatus, and the mobility switching station, comprising:
mobility switching station mobility management means configured to perform, along with a registration process of the mobile station, a security mode setup process as necessary according to a service request sent from the mobile station; and
mobile station information management means configured to store, in connection with the registration process, at least one of a ciphering key, a ciphering algorithm, an integrity protection key, and an integrity protection algorithm of the mobile station in an idle mode.

9. The mobility switching station as claimed in claim 8, wherein, when the mobile station that has been registered is registered to an other mobility switching station, the mobility switching station mobility management means transfers, to the other mobility switching station, at least one of the ciphering key, the ciphering algorithm, the integrity protection key, and the integrity protection algorithm of the mobile station in an idle mode.

10. The mobility switching station as claimed in claim 8, the mobility switching station further comprising:
message authentication code calculation means configured to calculate message authentication code based on a random number that is included in a service request transferred from the radio access network apparatus and that is used for calculating message authentication code,
wherein the mobility switching station mobility management means verifies validity of the service request based on the calculated message authentication code, and, when the validity is not verified, the mobility switching station mobility management means transmits a service rejection response.

11. The mobility switching station as claimed in claim 10, wherein, when the service request is valid, the mobility switching station mobility management means transmits, to the radio access network apparatus as a service response, at least one of the ciphering key, the ciphering algorithm, the integrity protection key and the integrity protection algorithm of the mobile station.

12. The mobility switching station as claimed in claim 8, wherein the mobility switching station mobility management unit determines necessity of the security mode setup process based on a result of comparison between ciphering and integrity protection algorithms that are implemented in the radio access network apparatus and that is included in the service request transferred from the radio access network apparatus, and algorithms used for the mobile station.

13. A mobile communication system including a mobile station, a radio access network apparatus and a mobility switching station,
the mobile station comprising:
mobile station mobility management means configured to issue, along with a service request, a request for validity verification of the service request when starting communication,
the radio access network apparatus comprising:
response message generation means configured to generate a response message for the random access request of the mobile station by including, in the response message, an identifier provided from the mobile communication system as channel setup information used by the mobile station and a random number used for the mobile station to calculate message authentication code; and
transmission means configured to transmit the response message to the mobile station that transmits the random access request, and
the mobility switching station comprising:
mobility switching station mobility management means configured to perform, along with a registration process of the mobile station, a security mode setup process as necessary according to the service request sent from the mobile station; and
mobile station information management means configured to store, in connection with the registration process, at least one of a ciphering key, a ciphering algorithm, an integrity protection key, and an integrity protection algorithm of the mobile station in an idle mode.

14. A communication service access method in a mobile communication system including a mobile station, a radio access network apparatus and a mobility switching station, wherein,
the mobile station performs:
an access request step of issuing a random access request to the radio access network; and
a service request step of issuing, along with a service request, a request for validity verification of the service request when starting communication,
the radio access network apparatus performs:
a response message generation step of generating a response message for the random access request of the mobile station by including, in the response message, an identifier provided from the mobile communication system as channel setup information used by the mobile station and a random number used for the mobile station to calculate message authentication code; and
a transmitting step of transmitting the response message to the mobile station that transmits the random access request, and
the mobility switching station performs:
a registration step of performing, along with a registration process of the mobile station, a security mode setup process as necessary according to the service request sent from the mobile station; and
a storing step of storing, in connection with the registration process, at least one of a ciphering key, a ciphering algorithm, an integrity protection key, and an integrity protection algorithm of the mobile station in an idle mode.
